# EUROPÄISCHE PATENTSCHRIFT

(11) **EP 1 717 714 B1**
(45) Veröffentlichungstag und Bekanntmachung des Hinweises auf die Patenterteilung: **26.05.2010**
(21) Anmeldenummer: 05009118.0
(22) Anmeldetag: 26.04.2005
(51) Int. Cl.: G06F 17/30

(54) **Elektronisches Archivierungsverfahren**
Electronic archiving method
Procédé d'archivage électronique

(43) Veröffentlichungstag der Anmeldung: 02.11.2006
(73) Patentinhaber: Cordys Deutschland AG, 70174 Stuttgart (DE)
(72) Erfinder: Schäfer, Thorsten, 71254 Ditzingen-Schöckingen (DE); Ehlers, Steffen, 70619 Stuttgart (DE)
(74) Vertreter: Grünecker, Kinkeldey, Stockmair & Schwanhäusser Anwaltssozietät

(56) Entgegenhaltungen:
- WO-A-01/17286
- WO-A-03/036515
- WO-A-03/061270
- WO-A-2004/079562
- US-A- 5 291 546
- US-A1- 2003 145 238
- XEROX CORPORATION: "User Guide 2.1.1 SP3 Update" FLOWPORT, [Online] April 2003 (2003-04), XP002340249 Gefunden im Internet: URL:http://download.support.xerox.com> [gefunden am 2005-08-10]
- XEROX CORPORATION: "Administrator Guide" FLOWPORT, [Online] April 2003 (2003-04), XP002340250 Gefunden im Internet: URL:http://download.support.xerox.com> [gefunden am 2005-08-10]
- XEROX: "Xerox Office Software Suite FlowPort Version 2.1.1" CAPTURE AND DISTRIBUTION, Februar 2001 (2001-02), XP002312871

## Beschreibung

Die vorliegende Erfindung betrifft ein Verfahren zur elektronischen Archivierung von in Papierform vorliegenden Dokumenten in einem zentralen Archivierungssystem.

Viele Unternehmen bieten ihren Kunden die Möglichkeit, elektronische Dokumente des Unternehmens im Rahmen einer Internetanwendung abzulegen und zu verwalten. So kann sich z.B. ein Kunde einer Bank Zugang zu einem ihm zugeordneten elektronischen Ablagefach, auch Verzeichnis genannt, verschaffen, indem er sich über das Internet bei einem elektronischen System der Bank anmeldet und daraufhin Zugang zu seinem Verzeichnis über eine sichere Kommunikationsverbindung erhält. In diesem Verzeichnis können, z.B. elektronische Kontoauszüge oder elektronische Überweisungen etc. des Kunden abgelegt sein und durch diesen verwaltet werden. Ebenso ist bekannt, dass einige Unternehmen aus Gründen der Zeit und Kostenersparnis Briefe an ihre Kunden nicht mehr auf postalischem Wege verschicken, sondern diese in einem dem Kunden zugeordneten elektronischen Verzeichnis ablegen. So bieten z.B. Online-Börsenhändler ihren Kunden elektronische Ablagefächer an, in denen sich verschiedene Unterverzeichnisse zur Archivierung von Briefdokumenten, Auftragsbestätigungen, erfolgten Transaktionen sowie Kontenübersichten etc. befinden und dort von dem Kunden verwaltet werden können.

In manchen Fällen kann es wünschenswert sein, dem Kunden die Möglichkeit zu geben, auch andere Dokumente nach seinem Wunsch in dem ihm zugeordneten Verzeichnis abzulegen. Auf diese Weise kann es z.B. dem Bankkunden ermöglicht werden, eigene Kommentare zu seinen Kontobewegungen oder seinen Finanzplanungen in dem ihm zugeordneten Verzeichnis elektronisch abzulegen. Ebenfalls kann es für den Kunden des Online-Börsenhändlers von Vorteil sein, wenn er seine finanzstrategischen Überlegungen im Zusammenhang mit der Transaktion von bestimmten Wertpapieren in dem elektronischen Verzeichnis ablegen kann, in dem auch die elektronischen Bestätigungen der jeweiligen Transaktionen abgelegt sind.

Diese Art von zusätzlichem Kundenservice ist auch aus dem Bereich der Internetanbieter bekannt. Diese bieten ihren Kunden üblicherweise nicht nur elektronische Postfächer, sondern auch Ablagemöglichkeiten für elektronische Dokumente aller Art (z.B. Texte, Tabellen, Grafiken, Bilder, Videos, Musik, etc.) an. Beispielsweise meldet sich ein Kunde bei einem Server seines Internet-Anbieters an und erlangt dadurch Zugang zu seinem persönlichen Verzeichnis. In dieses kann er dann über die Kommunikationsverbindung zwischen seinem Rechner und dem Server des Internetanbieters Dateien hoch- oder herunterladen. In einem typischen Anwendungsfall lädt der Benutzer ein bestimmtes Dokument in sein ihm zugeordnetes Verzeichnis bei dem Internetanbieter und legt nachfolgend dieses Dokument einer E-Mail zum Weiterversenden bei.

Um den Service einer elektronischen Ablagemöglichkeit benutzen zu können, müssen die abzulegenden Dokumente in einer digitalisierten Form vorliegen oder in eine solche gebracht werden. Aus dem Stand der Technik sind optische Datenerfassungsgeräte, genannt Scanner, bekannt, welche die Seiten eines in Papierform vorliegenden Dokumentes optisch abtasten und in ein elektronisches Datenformat umwandeln. Dadurch kann das auf diese Weise digitalisierte Dokument über einen mit dem Scanner verbundenen Computer in gleicher Weise in einer einem Benutzer zugeordneten elektronischen Ablage eines Dienstanbieters abgelegt werden wie die Dokumente des Benutzers, die bereits von vorneherein in elektronischer Form vorliegen.

Nachteilig an diesem Verfahren ist es, dass nicht alle Benutzer einen dementsprechenden mit dem Computer des Benutzers verbundenen Scanner besitzen. Weiterhin wird es von vielen Benutzern als unbequem empfunden, ein in Papierform vorliegendes Dokument zuerst durch einen Scanner zu digitalisieren und anschließend über eine durch den Computer des Benutzers aufzubauende Verbindung zu dem Dienstanbieter in dem dem Benutzer zugeordneten Ablagefach abzulegen.

Weiterhin sind aus dem Stand der Technik Faxgeräte bekannt, mittels derer die elektronische Übertragung von in Papierform vorliegenden Dokumenten durchgeführt werden kann. Dabei wird das zu übertragende Papierdokument in geeigneter Weise in das Faxgerät eingelegt. Anschließend adressiert der Benutzer das Empfangsfaxgerät durch Wahl einer dem Empfangsfaxgerät zugeordneten Faxnummer. Für die Übertragung tastet das Faxgerät des Benutzers das eingelegte Papierdokument ab und wandelt die gewonnene Information in ein Faksimile-Datenformat um. Auf der Empfangsseite druckt das empfangende Faxgerät die in dem Faksimile-Format empfangene Information in ihrer ursprünglichen Form auf Papier aus. Es ist ebenso möglich, dass auf der Empfangsseite ein Faxserver bereitsteht, der die empfangenen Faxe in elektronischer Form aufbewahrt oder auch zu einer elektronischen Weiterverarbeitung zur Verfügung stellt.

Vorteilhaft an der Verwendung von Faxgeräten ist deren einfache Handhabung sowie weite Verbreitung sowohl im privaten als auch im geschäftlichen Bereich. Nachteilig an der Verwendung von Faxgeräten ist, dass eine automatische Zuordnung eines übertragenen Dokumentes zu einem einem bestimmten Benutzer zugeordneten elektronischen Ablagefach nicht einfach möglich ist, da im Gegensatz zu dem oben beschriebenen Zugangsverfahren über das Internet bei der Faxübertragung keine direkte Verbindung zu dem zugeordneten Ablagefach besteht, sondern nur zu dem über die Faxnummer adressierten Faxgerät bzw. Faxserver auf der Empfangsseite. Ein weiterer Nachteil dieser fehlenden direkten Verbindung ist es, dass auf der Empfangsseite empfangene Faxe bis zu ihrer Zuordnung zu speziellen Ablagefächern auch für Dritte erkennbar sind.

Dokument WO 01/17286 beschreibt ein auf dieser Faxtechnik basierendes Archivierungssystem, bei dem jedem elektronischen Ablagefach auf Seiten des Servers eine feste Faxnummer zugeordnet ist.

Es ist Aufgabe der vorliegenden Erfindung, einem Benutzer mittels eines Faxgerätes das Ablegen eines in Papierform vorliegenden Dokumentes in ein dem Benutzer zugeordnetes elektronisches Ablagefach eines zentralen Archivierungssystems mit einer Vielzahl von elektronischen Ablagefächern zu ermöglichen, wobei das Archivierungssystem über eine Vielzahl von Faxnummern addressiert werden kann.

Diese Aufgabe wird gelöst durch den Gegenstand der unabhängigen Hauptansprüche.

Bevorzugte Ausführungsformen sind Gegenstand der Unteransprüche.

Der Erfindung liegt der Gedanke zugrunde, dass sich ein Benutzer moderner Kommunikationsmethoden über das Internet bedienen kann, um auf eine sichere und benutzerfreundliche Art eine eindeutige Identifizierungsinformation bzw. ein eindeutiges Kennwort von einem Archivierungssystem zu erhalten. Der Benutzer kann daraufhin ein in Papierform vorliegendes Dokument mit dieser Identifizierungsinformation kennzeichnen. Wird dieses Dokument dann über ein Faxgerät des Benutzers zu einem in dem Archivierungssystem integrierten Faxserver gefaxt, erkennt der Faxserver die Identifizierungsinformation. Aufgrund der erkannten ldentifizierungsinformation kann der Faxserver das empfangene Dokument einem bestimmten elektronischen Ablagefach des Archivierungssystems zuordnen und an dieses weiterleiten, wo es dann dem Benutzer zur weiteren Verarbeitung zur Verfügung steht. Da die Identifizierungsinformation erst aufgrund einer Anforderung des Benutzers im Zusammenhang mit der angekündigten Ablage eines Dokumentes, welches erst später dem Archivierungssystem zugefaxt wird, erstellt wird, ist diese Identifizierungsinformation sowohl mit dem Benutzer bzw. dem diesem Benutzer zugeordneten Ablagefach als auch mit der angekündigten Faxübertragung assoziiert und kann dementsprechend auch nur für die Ablage in dem dem Benutzer zugeordneten Ablagefach verwendet werden. Da der Zugang zu diesem Ablagefach über Verschlüsselungs- und Authentifizierungsmaßnahmen der modernen Kommunikationstechnologie abgesichert werden kann, ist das Dokument vor unbefugtem Zugriff geschützt. Auf diese Weise können die Vorteile der im Internet gebräuchlichen sicheren Methoden für die Ablage digitaler Dokumente in elektronischen Archivierungssystemen mit den Vorteilen eines Faxgerätes bei der Übertragung von in Papierform vorliegenden Dokumenten kombiniert werden.

In einer bevorzugten Ausführungsform der vorliegenden Erfindung wird ein Verfahren zur geordneten elektronischen Ablage eines in Papierform vorliegenden Dokumentes in ein bestimmtes Ablagefach eines zentralen Archivierungssystems mit einer Vielzahl von elektronischen Ablagefächern zur Verfügung gestellt, welches folgende Schritte umfasst:
Anmelden der Ablage des Dokumentes bei dem Archivierungssystem mittels einer elektronischen Datenverarbeitungsvorrichtung;
Erzeugen, aufgrund der Anmeldung, einer mit dem bestimmten Ablagefach assoziierten Identifizierungsinformation durch das Archivierungssystem;
Senden der Identifizierungsinformation von dem Archivierungssystem an die elektronische Datenverarbeitungsvorrichtung;
Empfangen der Identifizierungsinformation durch die elektronische Datenverarbeitungsvorrichtung;
Ausgeben der Identifizierungsinformation;
Übertragen der Identifizierungsinformation durch einen Benutzer an ein Faxgerät;
Senden des gekennzeichneten Dokumentes von dem Faxgerät an das Archivierungssystem;
Erkennen der Identifizierungsinformation durch das Archivierungssystem;
Zuordnen des Dokumentes zu dem bestimmten elektronischen Ablagefach aufgrund der Identifizierungsinformation durch das Archivierungssystem; und
Ablegen des Dokumentes in dem bestimmten elektronischen Ablagefach durch das Archivierungssystem.

In einer weiteren bevorzugten Ausführungsform beinhaltet das Verfahren vor dem Schritt des Anmeldens der Ablage ein Anmelden eines Benutzers bei dem Archivierungssystem durch Übermitteln von Zugangsdaten, ein Verifizieren der Zugangsdaten und, falls die Zugangsdaten als gültig verifiziert sind, ein Bereitstellen eines Zugangs zu Inhalten des Servers. Die Anmeldung des Benutzers kann dabei über eine Internetverbindung erfolgen und nach dem Verifizieren der Zugangsdaten kann eine sichere Kommunikationsverbindung für den Zugang zu den Inhalten des Servers aufgebaut werden. Bevorzugter Weise sind die Zugangsdaten personalisiert und ermöglichen dadurch eine automatische Zuordnung zu dem bestimmten dem Benutzer fest zugeordneten Ablagefach.

Gemäß einer weiteren Ausführungsform der vorliegenden Erfindung kann dem Benutzer nach erfolgter Ablage des Dokumentes eine E-Mail zugesendet werden, die über die erfolgreiche Ablage informiert. Die E-Mail kann dabei auch über die gegenwärtigen Eigenschaften des Ablagefaches, wie z.B. Größe, Anzahl der Dokumente, Dokumentnamen, etwaige Unterverzeichnisse, noch zur Verfügung stehender Speicherplatz, etc. informieren.

Die Identifizierungsinformation stellt eine dynamische Faxnummer dar, mittels derer das Dokument an den Server gesendet wird. Gemäß einem Aspekt der Erfindung ist die Identifizierungsinformation nur für eine vorbestimmte Zeitdauer gültig. Nach einem weiteren Aspekt wird die Identifizierungsinformation nach der Ablage des Dokumentes ungültig.

Beispielsweise wäre es auch denkbar, dass die Datenverarbeitungsvorrichtung nach dem Empfangen der Identifizierungsinformation ein Ausdrucken eines Blattes mit aufgedruckter Identifizierungsinformation veranlasst. Dieses ausgedruckte Blatt könnte dem Dokument vor dem Faxvorgang hinzugefügt werden. Die Identifizierungsinformation könnte dabei auch als Barcode dargestellt sein, der vor allem im Zusammenhang mit der Festlegung eines bestimmten Bereiches des Blattes für die Kennzeichnung das Erkennen der Identifizierungsinformation durch das Archivierungssystem nach dem Faxvorgang erleichtern könnte. In einem anderen Beispiel könnte das Dokument handschriftlich mit der Identifizierungsinformation gekennzeichnet werden.

Weitere Vorteile sowie bevorzugte Ausführungsformen der vorliegenden Erfindung ergeben sich im Folgenden unter Bezugnahme auf die beiliegenden Zeichnungen. Dabei zeigen die Zeichnungen im Einzelnen:
Fig. 1 eine schematische Darstellung eines für eine bevorzugte Ausführungsform des erfindungsgemäßen Verfahrens geeigneten Kommunikationssystems; und
Fig. 2 ein Ablaufdiagramm, das einzelne Schritte eines bevorzugten erfindungsgemäßen Verfahrens zur Ablage von Dokumenten aufzeigt.

Zur Verdeutlichung der Erfindung werden nun die beigefügten Figuren näher erläutert, wobei die folgende Beschreibung der Figuren von bevorzugten Ausführungsformen der Erfindung ausgeht.

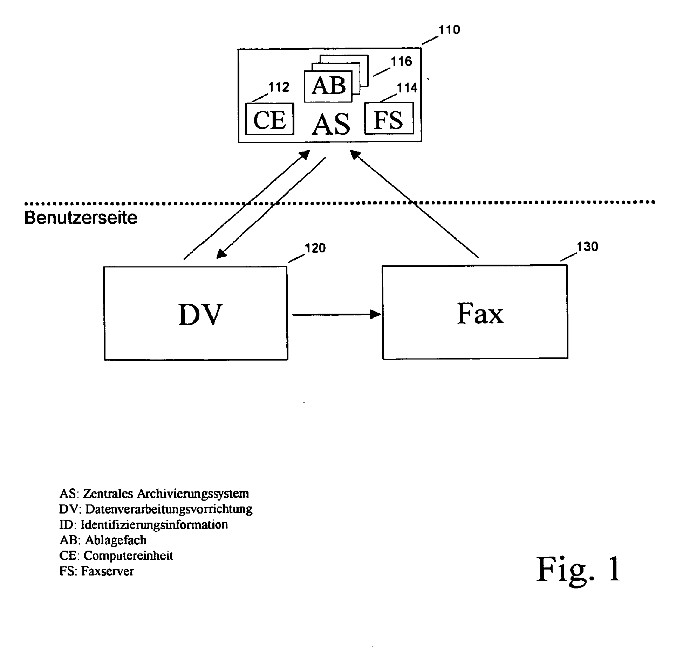

Fig. 1 zeigt eine schematische Darstellung eines Kommunikationssystems, welches für die Ausführung des erfindungsgemäßen Verfahrens bzw. deren bevorzugten Ausführungsformen geeignet ist. Das Kommunikationssystem besteht dabei aus einem zentralen Archivierungssystem 110 und, auf Benutzerseite, aus einem Computer bzw. einer Datenverarbeitungsvorrichtung 120 sowie einem Faxgerät 130. Das Archivierungssystem 110 umfasst dabei eine Computereinheit 112 zur Steuerung des Archivierungssystems, wobei die Datenverarbeitungsvorrichtung 120 des Benutzers mit dem Archivierungssystem 110 durch die Computereinheit 112 mittels im Internet üblichen Kommunikationsverfahren in bidirektionalen Kontakt treten kann, einen Faxserver 114, mit dem das Faxgerät 130 des Benutzers über bei der Faxübertragung üblichen Kommunikationsmethoden in Kontakt treten kann, und eine Vielzahl von elektronischen Ablagefächern 116, die zur Ablage von elektronischen Dokumenten dienen und verschiedenen Benutzern des Archivierungssystems zugeordnet sind.

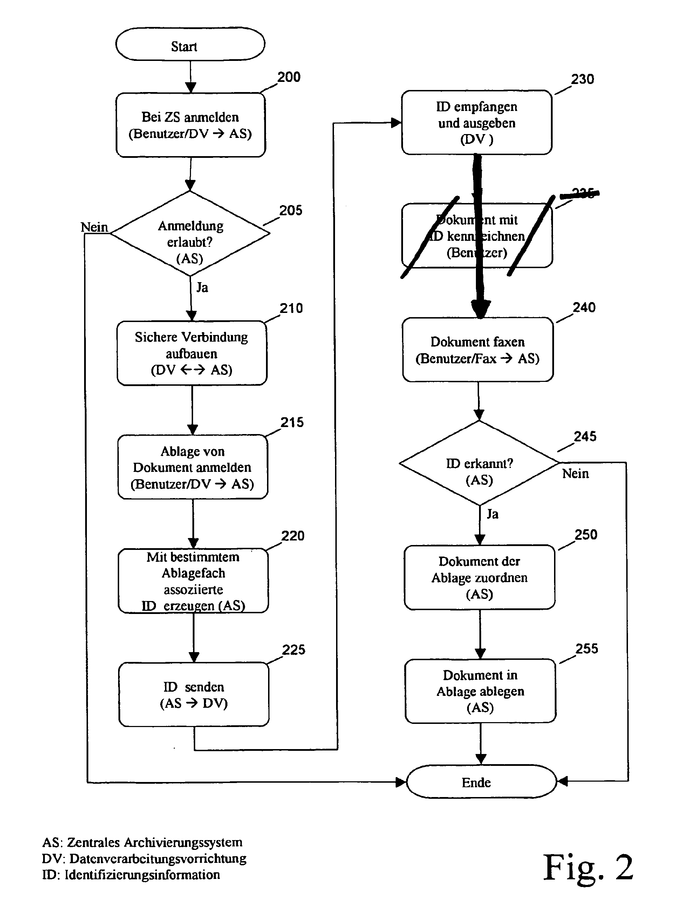

Anhand von Fig. 2 werden nun im Zusammenhang mit den in Fig. 1 dargestellten Systemkomponenten bevorzugte Ausführungsformen des erfindungsgemäßen Verfahrens näher erläutert.

In Schritt 200 meldet sich ein Benutzer unter Verwendung der Datenverarbeitungsvorrichtung 120 bei dem Archivierungssystem 110 an. Dies erfolgt z.B. mittels in der Internetkommunikation üblichen Verfahren zur Kontaktaufnahme mit der an das Internet angebundenen Computereinheit 112. Bei dem Anmelde- bzw. Log In-Verfahren gibt der Benutzer Zugangsdaten, z.B. seinen Benutzernamen sowie ein ihm zugeordnetes Kennwort ein, welche daraufhin auf ihre Gültigkeit und Zugangsberechtigung zu dem Archivierungssystem 110 von der Computereinheit 112 überprüft werden. Ergibt die Überprüfung des Benutzernamens und des Kennwortes in Schritt 205, dass keine Berechtigung für den Zugang zu dem Archivierungssystem 110 besteht, unterbindet die Computereinheit 112 den Anmeldevorgang und beendet das Verfahren. Ergibt die Überprüfung in Schritt 205, dass eine Zugangsberechtigung besteht, wird in Schritt 210 eine vorzugsweise sichere Verbindung zwischen der Datenverarbeitungsvorrichtung 120 des Benutzers und der Computereinheit 112 des Archivierungssystems 110 aufgebaut. Daraufhin meldet der Benutzer in Schritt 215 ein in Papierform vorliegendes Dokument zur Ablage in einem dem Benutzer zugeordneten elektronischen Ablagefach aus der Vielzahl von elektronischen Ablagefächern 116 des Archivierungssystems 110 an. Die Computereinheit 112 erzeugt daraufhin eine mit dem die Ablage anmeldenden Benutzer sowie mit der angemeldeten Ablage assoziierte Identifizierungsinformation in Schritt 220, teilt diese Identifizierungsinformation dem Faxserver 114 mit und sendet die Identifizierungsinformation in Schritt 225 zu der Datenverarbeitungsvorrichtung 120 des Benutzers. In Schritt 230 empfängt die Datenverarbeitungsvorrichtung 120 die Identifizierungsinformation und gibt sie dem Benutzer aus. Dies kann z. B. durch die Anzeige der Identifizierungsinformation auf einer Anzeigeeinheit der Datenverarbeitungsvorrichtung 120 oder durch Ausdruck eines Blattes Papier mit aufgedruckter Identifizierungsinformation über einen mit der Datenverarbeitungsvorrichtung 120 verbundenen Drucker erfolgen. Anschließend könnte der Benutzer das für die Ablage in dem elektronischen Ablagefach vorgesehene Dokument kennzeichnen.

Beispielsweise kann das Dokument in verschiedener Weise gekennzeichnet werden, z.B. handschriftlich durch den Benutzer. Dies kann z.B. dadurch erfolgen, dass die auf eine bestimmte Seite, z.B. die erste oder die letzte Seite des Dokument geschrieben wird oder dass auf ein separates Deckblatt geschrieben wird, welches als erste oder als letzte Seite dem Dokument hinzugefügt wird. Wird die Identifizierungsinformation nach deren Empfang in Schritt 230 auf einem Blatt Papier über einen Drucker ausgedruckt, könnte dieses Blatt Papier ebenfalls als erste oder als letzte Seite dem Dokument hinzugefügt werden.

In Schritt 240 wird das in Papierform vorliegende Dokument von dem Faxgerät 130 zu dem Faxserver 114 des Archivierungssystem 110 übertragen. Der Faxserver 114 empfängt das Dokument und versucht anschließend in Schritt 245, die Identifizierungsinformation, die in der beanspruchten Ausführungsform eine dynamisch erzeugte Faxnummer des Archivierungssystems ist, zu erkennen. Im Falle der Verwendung eines Deckblattes könnte dieses durch den Faxserver 114 von dem restlichen Dokument separiert werden.

Kann in Schritt 245 keine dem Faxserver 114 bekannte Identifizierungsinformation erkannt werden, wird das empfangene Dokument verworfen und das Verfahren beendet. Kann hingegen in Schritt 245 eine dem Faxserver 114 bekannte Identifizierungsinformation erkannt werden, ordnet der Faxserver 114 in Schritt 250 anhand der Identifizierungsinformation dem mit dieser Identifizierungsinformation assoziierten Ablagefach zu. Anschließend wird das empfangene Dokument in Schritt 255 in dem zugeordneten elektronischen Ablagefach abgelegt. In diesem Ablagefach steht es nun dem Benutzer zur Verfügung.

In der beanspruchten Ausführungsform stellt die in Schritt 220 erzeugte Identifizierungsinformation eine dynamische Faxnummer dar, mittels derer das Dokument in Schritt 240 an den Faxserver 114 des Archivierungssystems 110 übermittelt wird. In diesem Fall kann der Faxserver 114 von außen über mehrere Faxnummern adressiert werden, die er zumindest teilweise dynamisch generieren, aktivieren und zuordnen kann. In der beanspruchten Ausführungsform kann der Faxserver 114 bereits anhand der Faxnummer, über die er ein Dokument empfängt, die Zuordnung des empfangenen Dokumentes zu einem bestimmten Ablagefach durchführen. Daher muss in diesem Fall das Dokument nicht zusätzlich mit der dynamischen Faxnummer gekennzeichnet werden, da das Dokument bereits über das Faxen an die dynamische Faxnummer ausreichend gekennzeichnet ist.

In der beschriebenen beanspruchten Ausführungsformen ist es bevorzugt, dass die Identifizierungsinformation nur für eine vorbestimmte Zeitdauer gültig bleibt, d.h. dass nach dem Erzeugen der Identifizierungsinformation in Schritt 220 und dem Senden der Identifizierungsinformation in Schritt 225 ein mit dieser Identifizierungsinformation versehenes Dokument innerhalb der vorbestimmten Zeitdauer bei dem Faxserver 114 des Archivierungssystems 110 eingegangen sein muss, damit die Identifizierungsinformation nicht ungültig wird und wie eine dem Faxserver 114 nicht bekannte Identifizierungsinformation in Schritt 245 behandelt wird. Außerdem ist es weiterhin bevorzugt, dass die Identifizierungsinformation nach erfolgter Ablage des Dokumentes in Schritt 255 ungültig wird.

Ein weiterer Aspekt der vorliegenden Erfindung ist es, ein computerlesbares Speichermedium zur Verfügung zu stellen, welches Anweisungen zum Ausführen eines der oben beschriebenen bevorzugten Ausführungsformen des erfindungsgemäßen Verfahrens enthält.

Wie obenstehend anhand von bevorzugten Ausführungsformen beschrieben, erlaubt die vorliegende Erfindung die sichere elektronische Ablage eines in Papierform vorliegenden Ausgangsdokumentes in einem elektronischen Ablagefach eines Archivierungssystems, in dem das Ausgangsdokument mittels eines Faxgerätes an das Archivierungssystem übermittelt wird, wo es anhand einer dynamisch zugewiesenen Faxnummer dem bestimmten Ablagefach zugeordnet werden kann. Dies kombiniert in vorteilhafter Weise die Praktikabilität der Verwendung von Faxgeräten für die Übertragung von in Papierform vorliegenden Dokumenten mit der Benutzerfreundlichkeit elektronischer Archivierungssysteme und der Sicherheit von modernen Kommunikationsmethoden über das Internet.

Die vorliegende Erfindung wurde zwar anhand der obenstehenden bevorzugten Ausführungsformen beschrieben, es wird jedoch ausdrücklich festgehalten, dass die vorliegende Erfindung durch diese Ausführungsformen nicht eingeschränkt wird. Somit sind auch weitere Modifikationen innerhalb des Schutzbereichs der vorliegenden Erfindung möglich, der durch die Ansprüche festgelegt wird.

Beispiele für Modifikationen:
- Verwendung von einer Identifizierungs-information für die Ablage von mehreren Dokumenten innerhalb einer bestimmten Zeitdauer
- Unterteilen des elektronischen Ablagefaches in ein Oberverzeichnis und ein Unterverzeichnis; Möglichkeit des Erstellens oder Löschens von Unterverzeichnissen durch den Benutzer
- Möglichkeit der Weiterverarbeitung der in dem zugeordneten Ablagefach befindlichen Dokumente durch den Benutzer
- Ein mit der Identifizierungsinformation versehenes separates Blatt wird durch das Archivierungssystem nach dem Erzeugen der Identifizierungsinformation in elektronischer Form erzeugt, zu der Datenverarbeitungsvorrichtung übertragen und anschließend ausgedruckt
- Ein mit der Identifizierungsinformation versehenes separates Blatt wird durch die Datenverarbeitungsanlage nach dem Empfang der Identifizierungsinformation in elektronischer Form erzeugt und anschließend ausgedruckt
- Ein mit dem abzulegenden Dokument gesendetes Blatt, welches mit der Identifizierungsinformation versehen ist, wird nach dem Erkennen von der Identifizierungsinformation von dem Dokument getrennt
- Das abzulegende Dokument - oder ein hinzugefügtes separates Blatt - wird in einem vorbestimmten Bereich mit der Identifizierungsinformation gekennzeichnet
- Benachrichtigen des Benutzers bzw. dessen Datenverarbeitungsvorrichtung über eine erfolgte Dokumentenablage, z.B. mittels einer email

Der Schutzbereich der vorliegenden Erfindung wird durch die untenstehenden Patentansprüche definiert.

## Patentansprüche

1. Verfahren zur geordneten elektronischen Ablage eines in Papierform vorliegenden Dokumentes in ein bestimmtes elektronisches Ablagefach eines zentralen Archivierungssystems (110) mit einer Vielzahl von elektronischen Ablagefächem (116), wobei das Archivierungssystem über eine Vielzahl von Faxnummem adressiert werden kann, umfassend:
Anmelden (215) der Ablage des Dokuments bei dem Archivierungssystem (110) mittels einer elektronischen Datenverarbeitungsvorrichtung (120);
Erzeugen, aufgrund der Anmeldung und durch das Archivierungssystem (110), einer mit dem bestimmten elektronischen Ablagefach assoziierten dynamischen Faxnummer aus der Vielzahl von Faxnummem, über die das Archivierungssystem adressiert werden kann;
Senden (225) der dynamischen Faxnummer von dem Archivierungssystem an die Datenverarbeitungsvorrichtung (120);
Empfangen und Ausgeben (230) der dynamischen Faxnummer durch die Datenverarbeitungsvorrichtung (120);
Senden (240) des Dokumentes von einem Faxgerät (130) an das Archivierungssystem (110) durch einen Benutzer mittels der dynamischen Faxnummer;
Erkennen (245) der dynamischen Faxnummer durch das Archivierungssystem (110);
Zuordnen (250) des Dokumentes zu dem bestimmten elektronischen Ablagefach aufgrund der dynamischen Faxnummer durch das Archivierungssystem (110); und
Ablegen (255) des Dokumentes in dem bestimmten elektronischen Ablagefach durch das Archivierungssystem (110).

2. Verfahren nach Anspruch 1, weiter umfassend, vor dem Schritt des Anmeldens (215) der Ablage, ein Anmelden (200) eines Benutzers bei dem Archivierungssystem durch Übermitteln von Zugangsdaten, ein Verifizieren (205) der Zugangsdaten und, falls die Zugangsdaten als gültig verifiziert sind, ein Bereitstellen eines Zugangs zu Inhalten des Archivierungssystems.

3. Verfahren nach Anspruch 2, weiter umfassend ein Aufbauen (210) einer sicheren Kommunikationsverbindung für den Zugang zu den Inhalten des Archivierungssystems.

4. Verfahren nach Anspruch 2 oder 3, wobei die Zugangsdaten personalisiert sind und eine automatische Zuordnung zu dem bestimmten elektronischen Ablagefach ermöglichen.

5. Verfahren nach einem der Ansprüche 1 bis 4, wobei die dynamische Faxnummer nach der Ablage des Dokumentes ungültig wird.

6. Verfahren nach einem der Ansprüche 1 bis 4, wobei die dynamische Faxnummer nach einer vorbestimmten Zeitdauer ungültig wird.

7. Computerlesbares Speichermedium, welches Anweisungen zum Ausführen eines Verfahrens gemäß der Ansprüche 1 bis 6 enthält.

## Claims

1. Method of ordered electronic filing of a document which exists in paper form in a specified electronic pigeon hole of a central archiving system (110) with multiple electronic pigeon holes (116), it being possible to address the archiving system via multiple fax numbers, including:
registering (215) for filing the document in the archiving system (110) by means of an electronic data processing device (120);
generating, on the basis of the registering and by the archiving system (110), a dynamic fax number which is associated with the specified electronic pigeon hole, from the multiple fax numbers via which the archiving system can be addressed;
sending (225) the dynamic fax number from the archiving system to the data processing device (120);
receiving and outputting (230) the dynamic fax number by the data processing device (120);
sending (240) the document from a fax machine (130) to the archiving system (110) by a user, by means of the dynamic fax number;
recognising (245) the dynamic fax number by the archiving system (110);
assigning (250) the document to the specified electronic pigeon hole on the basis of the dynamic fax number by the archiving system (110); and
filing (225) the document in the specified electronic pigeon hole by the archiving system (110).

2. Method according to Claim 1, also including, before the step of registering in (215) for filing, logging into (200) the archiving system by a user by transmitting access data, verifying (205) the access data, and if the access data is verified as valid, providing access to contents of the archiving system.

3. Method according to Claim 2, also including setting up (210) a secure communication connection for access to contents of the archiving system.

4. Method according to Claim 2 or 3, wherein the access data are personalised and facilitate automatic assignment to the specified electronic pigeon hole.

5. Method according to one of Claims 1 to 4, wherein the dynamic fax number becomes invalid after the document is filed.

6. Method according to one of Claims 1 to 4, wherein the dynamic fax number becomes invalid after a predetermined time period.

7. Computer-readable storage medium, containing instructions for carrying out a method according to Claims 1 to 6.

## Revendications

1. Procédé pour le classement électronique ordonné d'un document existant sous forme de papier, dans un casier électronique défini d'un système d'archivage central (110) comprenant un grand nombre de casiers électroniques (116), le système d'archivage pouvant être adressé par l'intermédiaire d'un grand nombre de numéros de fax, comprenant :
la demande (215) de classement du document auprès du système d'archivage (110) à l'aide d'un dispositif électronique de traitement de données (120) ;
la production, sur la base de la demande et par le système d'archivage (110), d'un numéro de fax dynamique associé au casier électronique défini, à partir du grand nombre de numéros de fax par l'intermédiaire desquels le système d'archivage peut être adressé ;
l'envoi (225), par le système d'archivage au dispositif de traitement de données (120), du numéro de fax dynamique ;
la réception et l'édition (230) du numéro de fax dynamique par le dispositif de traitement de données (120) ;
l'envoi (240) du document par un utilisateur à l'aide du numéro de fax dynamique, d'un télécopieur (130) vers le système d'archivage (110) ;
la reconnaissance (245) du numéro de fax dynamique par le système d'archivage (110) ;
l'affectation (250) du document au casier électronique défini, sur la base du numéro de fax dynamique, par le système d'archivage (110) ; et
le classement (255) du document dans le casier électronique défini, par le système d'archivage (110).

2. Procédé selon la revendication 1, comportant également, avant l'étape de la demande (215) de classement, une demande (200) d'un utilisateur auprès du système d'archivage grâce à la transmission de données d'accès, une vérification (205) des données d'accès et, au cas où les données d'accès sont valables, une mise à disposition d'un accès à des contenus du système d'archivage.

3. Procédé selon la revendication 2, comprenant également l'établissement (210) d'une liaison de communication sûre pour l'accès aux contenus du système d'archivage.

4. Procédé selon la revendication 2 ou 3, selon lequel les données d'accès sont personnalisées et permettent une affectation automatique au casier électronique défini.

5. Procédé selon l'une des revendications 1 à 4, selon lequel le numéro de fax dynamique devient invalide après le classement du document.

6. Procédé selon l'une des revendications 1 à 4, selon lequel le numéro de fax dynamique devient invalide au bout d'une durée prédéfinie.

7. Support de mémoire lisible par ordinateur, qui contient des instructions pour la mise en oeuvre d'un procédé selon l'une des revendications 1 à 6.
